# EUROPÄISCHE PATENTANMELDUNG

(11) **EP 0 648 965 A1**
(43) Veröffentlichungstag der Anmeldung: **19.04.1995**
(21) Anmeldenummer: 94115990.7
(22) Anmeldetag: 11.10.1994
(51) Int. Cl.: F16K 27/02, F16K 17/08, F16K 17/168

(54) **Baugruppe für ein Membran-Sicherheitsventil zum Einsetzen in ein Sicherheitsventil-Gehäuse**

(30) Priorität: 15.10.1993 DE 4335186
(71) Anmelder: HANS SASSERATH & CO KG, D-41352 Korschenbroich (DE)
(72) Erfinder: Hecking, Willi, D-41238 Mönchengladbach (DE)
(74) Vertreter: Weisse, Jürgen, Dipl.-Phys. Patentanwalt

(57) **Zusammenfassung**

Eine Baugruppe für ein Membran-Sicherheitsventil zum Einsetzen in ein Sicherheitsventil-Gehäuse soll einfach und preisgünstig hergestellt werden und mit verschiedenen Typen von Sicherheitsventil-Gehäusen verwendbar sein. Zu diesem Zweck enthält die Baugruppe einen Gehäuseoberteil (14), einen Gehäuseunterteil (10), eine zwischen Gehäuseoberteil (14) und Gehäuseunterteil (10) eingespannte Membran (22), ein mit der Membran (22) verbundenes Ventilschließglied (30), eine in dem Gehäuseoberteil (14) angeordnete, auf das Ventilschließglied (30) wirkende Belastungsfeder (48), die sich an einem Federwiderlager (50) abstützt, und einen an einem rohrförmigen Ventilsitzkörper (32) vorgesehenen Ventilsitz (40), der mit dem Gehäuseunterteil (10) verbunden ist und der in das Sicherheitsventil-Gehäuse abdichtend einsetzbar ist und mit dem Ventilschließglied (30) zusammenwirkt. Bei einer solchen Baugruppe ist die Verbindung zwischen der Baugruppe (112) und dem Sicherheitsventil-Gehäuse (114;132) allein durch Einschrauben des Ventilsitzkörpers (32) unmittelbar in das Sicherheitsventil-Gehäuse (114;132) herstellbar. Das Gehäuseunterteil (10) und das Gehäuseoberteil (14) sind Blech-Tiefziehteile. Der Rand der Membran (22) ist zusammen mit einem Rand (20) des Gehäuseoberteils (14) durch Einrollen mit dem Gehäuseunterteil (10) verbunden. Das Gehäuseunterteil (10) weist seitliche Durchbrüche (12) zum Austritt des Druckmittels beim Ansprechen des Sicherheitsventils auf. Der Ventilsitzkörper (32) weist an seinem ventilsitzseitigen Ende einen Bund (34) auf, der von einem umgebogenen Rand (38) des Gehäuseunterteils (10) umgriffen wird.

## Beschreibung

Die Erfindung betrifft eine Baugruppe für ein Membran-Sicherheitsventil zum Einsetzen in ein Sicherheitsventil-Gehäuse, enthaltend
(a) einen Gehäuseoberteil,
(b) einen Gehäuseunterteil,
(c) eine zwischen Gehäuseoberteil und Gehäuseunterteil eingespannte Membran
(d) ein mit der Membran verbundenes Ventilschließglied,
(e) eine in dem Gehäuseoberteil angeordnete, auf das Ventilschließglied wirkende Belastungsfeder, die sich an einem Federwiderlager abstützt, und
(f) einen an einem rohrförmigen Ventilsitzkörper vorgesehenen Ventilsitz, der mit dem Gehäuseunterteil verbunden ist und der in das Sicherheitsventil-Gehäuse abdichtend einsetzbar ist und mit dem Ventilschließglied zusammenwirkt.

Ein Membran-Sicherheitsventil enthält üblicherweise ein Gehäuse mit einem Einlaß und Auslaß. In dem Gehäuse ist ein Ventilsitz gebildet, der einen Durchgang zwischen Einlaß und Auslaß umgibt. Mit dem Ventilsitz arbeitet ein Ventilschließkörper zusammen. Der Ventilschließkörper sitzt an einer Membran. Die Membran schließt den druckmittelgefüllten Raum gegen den übrigen Mechanismus des Membran-Sicherheitsventils ab. Die Membran ist von einer Belastungsfeder mit einer einstellbaren Vorspannung belastet. Wenn der auf die Membran innerhalb des Ventilsitzes wirkende Druck des Druckmittels die Vorspannung der Belastungsfeder überwindet, dann hebt das Ventilschließglied von dem Ventilsitz ab. Dabei wird der Druck nicht nur innerhalb des Ventilsitzes sondern auf der gesamten Membranfläche wirksam. Das Membran-Sicherheitsventil öffnet. Es schließt nach Abblasen des Druckmittels mit einer Hysterese.

Bei bekannten Membran-Sicherheitsventilen ist der Ventilsitz an das Gehäuse angeformt. Es hat sich gezeigt, daß der Ventilsitz schnell verschleißt. Um das System wieder ordnungsgemäß zu sichern ist es dann erforderlich, das gesamte Membran-Sicherheitsventil einschließlich des in einem Druckmittelsystem fest installierten Sicherheitsventil-Gehäuses auszutauschen. Das erfordert nicht nur einen Ersatz des Sicherheitsventil-Gehäuses sondern auch zeitraubende Installations-Arbeiten.

Es ist daher bekannt, "Austauschpatronen" vorzusehen. Das sind Baugruppen mit Membran, Belastungsfeder und Ventilsitz. Diese "Austauschpatronen" werden in ein fest installiertes Sicherheitsventil-Gehäuse eingesetzt, das keinen angeformten Ventilsitz aufweist. Der Ventilsitz ist von einem zylindrischen Ventilsitzkörper gebildet, der an der Austauschpatrone angebracht ist und abdichtend in einen dafür vorbereiteten Kanal des Sicherheitsventil-Gehäuses eingesetzt wird. Die Membran ist dabei üblicherweise zwischen einem Gehäuseunterteil und einem in das Gehäuseunterteil eingeschraubtes Gehäuseoberteil eingeklemmt. Gehäuseunterteil und Gehäuseoberteil bilden ein Gehäuse der Austauschpatrone. Dabei weist üblicherweise der Gehäuseunterteil ein Außengewinde auf, mittels dessen die Austauschpatrone in das im System fest installierte Sicherheitsventil-Gehäuse eingeschraubt wird.

Gehäuseunterteil und Gehäuseoberteil der Austauschpatrone sind dabei üblicherweise bearbeitete Gußteile. Der Auslaß ist an dem Sicherheitsventil-Gehäuse vorgesehen.

Die bekannten Austauschpatronen sind aufwendig. Jeder Typ von Austauschpatrone setzt ein daran angepaßtes Sicherheitsventil-Gehäuse voraus, bei welchem das Gewinde zum Einschrauben des Gehäuseunterteils in bestimmter Lage zu der im Sicherheitsventil-Gehäuse gebildeten Aufnahme für den Ventilsitz angeordnet ist. Ferner muß eine durch die Form des Sicherheitsventil-Gehäuses vorgegebene gegenseitige Lage von Einlaß- und Auslaßanschluß bei der Installation eingehalten werden.

Der Erfindung liegt die Aufgabe zugrunde, ein Sicherheitsventil mit einer "Austauschpatronen"-Baugruppe der eingangs genannten Art mit geringem Aufwand herzustellen.

Der Erfindung liegt die speziellere Aufgabe zugrunde, eine "Austauschpatronen"-Baugruppe so auszubilden, daß sie für verschiedene Typen von Sicherheitsventil-Gehäusen geeignet ist.

Erfindungsgemäß werden diese Aufgaben bei einer Baugruppe der eingangs genannten Art dadurch gelöst, daß
(g) die Verbindung zwischen der Baugruppe und dem Sicherheitsventil-Gehäuse allein durch Einschrauben des Ventilsitzkörpers unmittelbar in das Sicherheitsventil-Gehäuse herstellbar ist.

Die Verschraubung der "Austauschpatronen"-Baugruppe mit dem Sicherheitsventil-Gehäuse erfolgt somit nicht am Gehäuseunterteil der Baugruppe sondern an dem Ventilsitzkörper. Es braucht dann kein Gewinde an dem Sicherheitsventil-Gehäuse angebracht zu werden, das in spezieller Weise zu der Aufnahme für den Ventilsitzkörper angeordnet ist. Es ist dadurch möglich, eine einzige Art von "Austauschpatronen"-Baugruppen mit Sicherheitsventil-Gehäusen verschiedener Bauart zu kombinieren. Es braucht nur der Durchmesser der Aufnahme für den Ventilsitzkörper genormt zu werden.

Eine einfache Herstellung der Baugruppe wird weiterhin dadurch erreicht, daß der Gehäuseunterteil und der Gehäuseoberteil Blech-Tiefziehteile sind. Der Rand der Membran ist zusammen mit einem Rand des Gehäuseoberteils durch Einrollen mit dem Gehäuseunterteil verbunden. Das Gehäuseunterteil weist seitliche Durchbrüche zum Austritt des Druckmittels beim Ansprechen des Sicherheitsventils auf. Der Ventilsitzkörper weist an seinem ventilsitzseitigen Ende einen Bund auf, der von einem umgebogenen Rand des Gehäuseunterteils umgriffen wird.

Weitere Ausgestaltungen der Erfindung sind Gegenstand der abhängigen Ansprüche 6 bis 13.

Ein Ausführungsbeispiel der Erfindung mit verschiedenen Anwendungen ist nachstehend unter Bezugnahme auf die zugehörigen Zeichnungen näher erläutert.
- Fig.1: zeigt einen Längsschnitt durch eine Baugruppe für ein Membran-Sicherheitsventil zum Einsetzen in ein Sicherheitsventil-Gehäuse.
- Fig.2: zeigt eine Anwendung der Baugruppe von Fig.1 in Verbindung mit einem ersten Typ von Sicherheitsventil-Gehäuse.
- Fig.3: zeigt eine Anwendung der Baugruppe von Fig.1 in Verbindung mit einem zweiten Typ von Sicherheitsventil-Gehäuse.

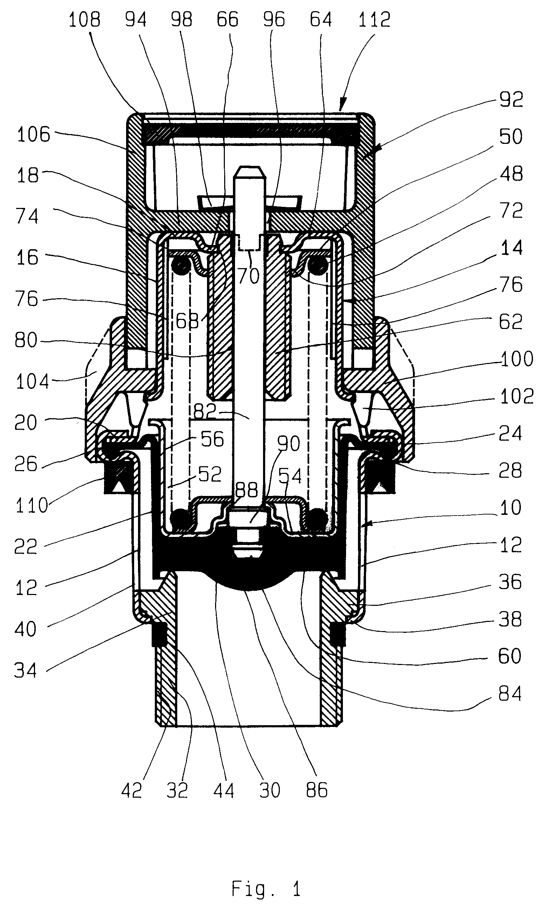

In Fig.1 ist mit 10 ein Gehäuseunterteil eines Gehäuses einer Sicherheitsventil-"Austauschpatrone" bezeichnet. Der Gehäuseunterteil 10 ist ein tiefgezogener Blechteil von zylindrischer Grundform. Der Gehäuseunterteil 10 weist in seiner zylindrischen Mantelfläche seitliche Durchbrüche 12 auf. Der Gehäuseunterteil 10 bildet mit einem Gehäuseoberteil 14 das Gehäuse der Sicherheitsventil-Austauschpatrone. Der Gehäuseoberteil 14 ist topfförmig mit einer zylindrischen Mantelfläche 16 und einem dem Gehäuseunterteil abgewandten Boden 18. Der Gehäuseoberteil 14 weist an seinem in Fig.1 unteren, dem Gehäuseunterteil zugewandten Rand einen Flansch 20 auf. Der Flansch 20 liegt auf dem Rand einer Membran 22 auf. Der Flansch 20 und der Rand der Membran 22 wird von einem umgebördelten Rand 24 des Gehäuseunterteils 10 umgriffen. Der Rand der Membran 22 bildet eine Wulst 26. Der umgebördelte Rand 24 des Gehäuseunterteils bildet eine ringförmige Vertiefung 26, in welcher die Wulst 26 gehalten ist. Dadurch ist die Wulst 26 gegen radial einwärts gerichteten Zug gesichert. Auf diese Weise wird ein aus tiefgezogenen Blechteilen gebildetes Gehäuse erhalten, in welchem die Membran 22 zwischen Gehäuseunterteil 10 und Gehäuseoberteil 14 gehalten ist.

Mit 30 ist ein Ventilschließkörper bezeichnet. Der Ventilschließkörper 30 wird von einem verdickten Mittelteil der Membran 22 gebildet. Der verdickte Mittelteil ist von einem ringförmigen Bereich geringerer Dicke und höherer Flexibilität umgeben der sich im wesentlichen koaxial zu dem Gehäuseunterteil 10 erstreckt und am Rand mit einer Welle radial nach außen zu der Wulst 26 hin verläuft. Die Membran 22 besteht aus einem gummielastischen Material.

Am unteren, der Membran 22 abgewandten Ende des Gehäuseunterteils 10 ist ein rohrförmiger Ventilsitzkörper 32 angebracht. Der Ventilsitzkörper 32 weist einen Bund 34 auf. Der Bund 34 ist mit einer äußeren Rändelung 36 versehen. Der Gehäuseunterteil 10 greift mit einem nach innen umgebogenen Rand 38 um den Bund 34. Außerdem ist der Gehäuseunterteil 10 im Bereich der Rändelung 36 radial in die Rändelung 36 eingedrückt. Der Ventilsitzkörper 32 bildet an seiner in den Gehäuseunterteil 10 hineinragenden Stirnfläche einen Ventilsitz 40. Der Ventilsitz 40 wirkt mit dem Ventilschließkörper 30 zusammen. An dem aus dem Gehäuseunterteil 10 herausragenden Ende weist der Ventilsitzkörper 32 ein Außengewinde 42 auf. Zwischen dem Außengewinde 42 und dem umgebogenen Rand 38 des Gehäuseunterteils 10 ist in dem Ventilsitzkörper 32 eine Umfangsnut 44 vorgesehen. In der Umfangsnut 44 sitzt ein Dichtring 46.

Die Membran 22 und das Ventilschließglied 30 sind von einer als Schraubenfeder ausgebildeten Belastungsfeder 48 belastet. Die Belastungsfeder 48 ist an einem Federwiderlager 50 abgestützt.

Auf dem Ventilschließglied 30 liegt ein topfförmiger Blechteil 52 auf. Der Blechteil 52 bildet einen auf dem Ventilschließglied 30 aufliegenden Boden 54 und einen sich längs der Innenfläche des koaxial zu dem Gehäuseunterteil verlaufenden Abschnitts der Membran 22 erstreckenden, im wesentlichen zylindrischen Mantel 56. Auf dem Boden 54 des Blechteils 52 liegt ein Federteller 58. Der Federteller 58 ist hutförmig und zum Boden 54 des Blechteils 52 hin offen. Der Federteller 58 liegt mit seinem Rand 60 auf dem Boden 54 des Blechteils 52 auf. An dem Rand 60 liegt die Belastungsfeder 48 an.

In dem Gehäuseoberteil 14 ist eine Gewindespindel 62 drehbar gelagert. Zu diesem Zweck weist der Gehäuseoberteil 14 in seinem Boden 18 einen zentralen Durchbruch 64 auf. Der Rand dieses Durchbruchs 64 bildet eine Einsenkung 66. Der Rand des Durchbruchs 64 ist in eine Ringnut 68 der Gewindespindel 62 eingerastet. Die Gewindespindel 62 weist an ihrem durch den Boden 18 des Gehäuseoberteils 14 hindurchragenden Ende einen Querschlitz 70 auf. Dieser Querschlitz 70 gestattet eine Verdrehung der Gewindespindel 62.

Auf der Gewindespindel 62 sitzt das Federwiderlager 50. Das Federwiderlager 50 ist ein ringscheibenförmiger Blechteil desssen Innenrand eine Einsenkung 72 bildet und an dessen radial sich erstreckendem Rand 74 die Belastungsfeder 48 anliegt. Das Federwiderlager 50 ist mit seinem inneren Rand auf dem Gewinde der Gewindespindel 62 geführt. An seinem äußeren Rand weist das Federwiderlager 50 Ausschnitte auf, in welche längsverlaufende Sicken oder Einprägungen 76 des Mantels 16 des Gehäuseoberteils 14 eingreifen. Auf diese Weise ist das Federwiderlager 50 geradgeführt. Bei einer Verdrehung der Gewindespindel 62 wird das Federwiderlager daher auf- oder abwärts verstellt. Damit wird die Vorspannung der Belastungsfeder 48 verändert.

Die Gewindespindel 62 weist eine Längsbohrung 80 auf. Durch die Längsbohrung 80 ist ein mit dem Ventilschließglied 30 verbundener Ventilstößel 82 geführt. Das mit einem kegelstumpfförmigen Bund 84 versehene Ende des Ventilstößels 82 ist in einer Ausnehmung 86 des den Ventilschließkörper 30 bildenden verdickten Mittelteils der Membran 22 eingerastet. Der topfförmiger Blechteil 52 weist einem zentralen Durchbruch 88 auf. Der Ventilstößel 82 ist durch diesen zentralen Durchbruch 88 hindurchgeführt. Der topfförmige Blechteil 52 ist um den Durchbruch 88 herum nach oben in Fig.1 gewölbt und greift mit seinem Innenrand über einen Bund 90 des Ventilstößels 82.

Auf dem Gehäuseoberteil 14 sitzt ein topfförmiger Anlüftgriff 92. Der Boden 94 des topfförmigen Anlüftgriffes 92 weist einen zentralen Durchbruch 96 auf. Das Ende des Ventilstößels 82 ragt durch diesen Durchbruch 96 hindurch. Auf dem Ende des Ventilstößels 82 sitzt ein Mitnehmerring 98. An dem Gehäuseoberteil 14 ist eine mit Schrägflächen versehene Griffhalterung 100 angebracht. Die Griffhalterung 100 weist Schrägflächen auf, die mit Nocken 102 des Anlüftgriffes 92 zusammenwirken. Dadurch kann das Sicherheitsventil zu Prüfzwecken angelüftet werden. Bei einer Verdrehung des Anlüftgriffes 92 wird dieser gegenüber der Griffhalterung 100 über die Nocken 120 und Schrägflächen angehoben. Über den Mitnehmerring 98 und den Ventilstößel 82 wird der Blechteil 52 und das Ventilschließglied 30 gegen die Wirkung der Belastungsfeder 48 angehoben.

Die Griffhalterung 100 ist mittels Haltenocken durch eine Schnappverbindung undrehbar in den Gehäuseunterteil 10 eingerastet. Am Umfang der Griffhalterung 100 sind Ansätze 104 vorgesehen, welche eine Drehmomentausübung zum Einschrauben der Baugruppe mit dem Ventilsitzkörper 32 in ein Sicherheitsventil-Gehäuse ermöglichen.

Die Griffhalterung 92 weist an ihrem dem Ventilsitzkörper 32 abgewandten Ende einen über den Boden 94 hinausgehenden Kragen 106 auf. In den Kragen ist eine Abschlußscheibe 108 eingesetzt. Dadurch ist das Ende des Ventilstößels 82 mit der Ringscheibe 98 abgedeckt.

Am oberen, dem Ventilsitzkörper 32 abgewandten Ende des Gehäuseunterteils 10 sitzt ein Dichtring 110.

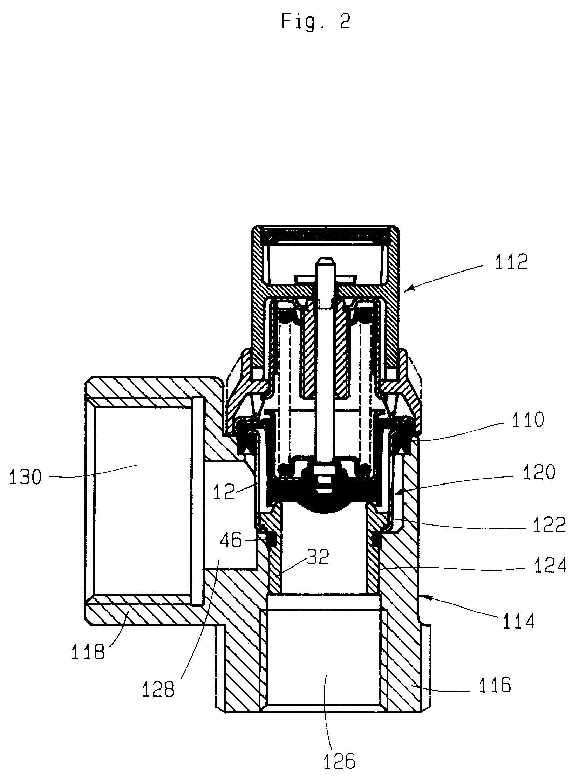

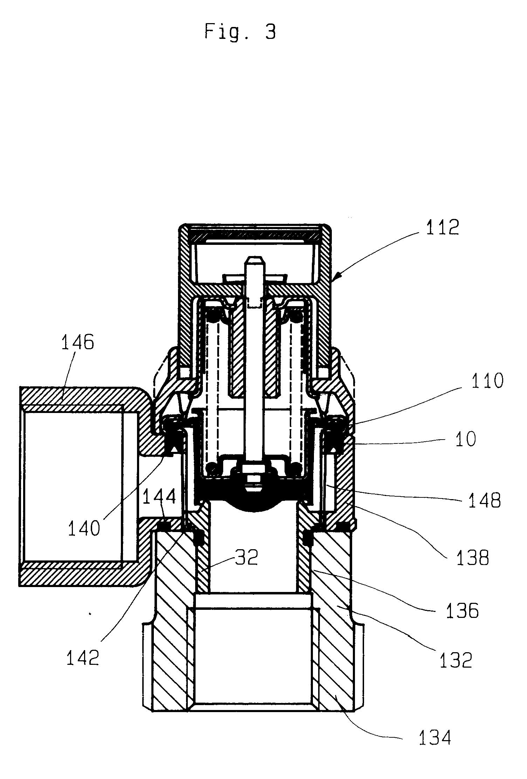

Fig.2 und 3 zeigt zwei Ausführungen, bei denen die beschriebene Baugruppe in unterschiedliche Sicherheitsventil-Gehäuse eingesetzt sind. Die Baugruppe oder "Austauschpatrone" ist in beiden Fällen generell mit 112 bezeichnet.

Bei der Ausführung nach Fig.2 weist ein Sicherheitsventil-Gehäuse 114 einen Einlaßstutzen 116 und einen rechtwinklig dazu angeordneten, an das Gehäuse ebenfalls angeformten Auslaßstutzen 118 auf. Fluchtend mit dem Einlaßstutzen ist in dem Sicherheitsventil-Gehäuse 114 von der entgegengesetzten Seite her eine Bohrung 120 vorgesehen. Die Bohrung 120 weist einen Abschnitt 122 von größerem Durchmesser und einen daran anschließenden Abschnitt 124 von vermindertem Durchmesser auf. Der Abschnitt 124 ist mit einem (nicht dargestellten) Innengewinde versehen. Der Abschnitt 124 geht in die Bohrung 126 des Anschlußstutzens 116 über. Der Abschnitt 122 der Bohrung 120 wird von einer Bohrung 128 angeschnitten, die mit der Bohrung 130 des Auslaßstutzens 118 in Verbindung steht. In die Bohrung 120 ist eine Baugruppe 112 nach Art von Fig.1 eingesetzt. Dabei ist der Ventilsitzkörper 32 in den mit Innengewinde versehenen Abschnitt 124 der Bohrung 120 eingeschraubt. Der Dichtring 46 liegt an einem nicht mit Gewinde versehenen Teil des Abschnitts 124 an und bewirkt eine Abdichtung für das unter Druck stehende Druckmittel im Einlaßstutzen 116. Die Dichtung 110 dichtet den Abschnitt 122 der Bohrung 120 gegen die Atmosphäre ab. Über die seitlichen Öffnungen 12 des Gehäuseunterteils 10 tritt bei Ansprechen des Sicherheitsventils Druckmittel in den Abschnitt 122 der Bohrung 120 und über die Bohrung 128 in die Bohrung 130 des Auslaßstutzens 118 aus.

Bei der Ausführung nach Fig.3 ist das Sicherheitsventil-Gehäuse von einem Rohrstück 132 gebildet, das über einen Anschlußstutzen 134 mit einem (nicht dargestellten) zu sichernden Druckmittelsystem verbunden ist. Das Rohrstück 132 hat eine Bohrung 136, die mit einem (nicht dargestellten) Innengewinde verbunden ist. In der Bohrung 136 sitzt der Ventilsitzkörper 32 der Baugruppe 132.

Der Gehäuseunterteil 10 der Baugruppe oder Austauschpatrone 112 ist von einem zylindrischen Auslaufgehäuse 138 umgeben. Das zylindrische Auslaufgehäuse 138 weist einen Durchbruch 140 in seiner dem Rohrstück 132 abgewandten Stirnwand auf. Ein damit fluchtender Durchbruch 142 ist in der an das Rohrstück 132 angrenzenden Stirnwand vorgesehen. Durch diese Durchbrüche 140 und 142 ist das Bauteil 112 eigesetzt und mit dem Ventilsitzkörper 32 in die Bohrung eingeschraubt. Durch einen Dichtring 144 erfolgt eine Abdichtung zwischen der Stirnfläche des Rohrstücks 132 und der benachbarten Stirnfläche des Auslaufgehäuses. Eine Abdichtung zwischen dem Gehäuseunterteil 10 und dem Rand des Durchbruchs 140 erfolgt durch die Dichtung 110. Das getrennte Auslaufgehäuse 138 wird nach dem Einschrauben des Ventilsitzkörpers 32 in das Rohrstück 134 durch die Griffhalterung 100 gehalten. An dem Auslaufgehäuse 138 ist ein seitlicher Auslaufstutzen 146 angeformt, der mit dem Innenraum 148 des Auslaufgehäuses in Verbindung steht.

Das Auslaufgehäuse 138 ist um die gemeinsame Achse von Rohrstück 132 und Bauteil 112 verdrehbar. Dadurch kann die Lage des Auslaufstutzens 146 bequem an die Installationsbedingungen angepaßt werden. Das Auslaufgehäuse kann aus Kunststoff hergestellt sein.

## Patentansprüche

1. Baugruppe für ein Membran-Sicherheitsventil zum Einsetzen in ein Sicherheitsventil-Gehäuse, enthaltend
(a) einen Gehäuseoberteil (14),
(b) einen Gehäuseunterteil (10),
(c) eine zwischen Gehäuseoberteil (14) und Gehäuseunterteil (10) eingespannte Membran (22)
(d) ein mit der Membran (22) verbundenes Ventilschließglied (30),
(e) eine in dem Gehäuseoberteil (14) angeordnete, auf das Ventilschließglied (30) wirkende Belastungsfeder (48), die sich an einem Federwiderlager (50) abstützt, und
(f) einen an einem rohrförmigen Ventilsitzkörper (32) vorgesehenen Ventilsitz (40), der mit dem Gehäuseunterteil (10) verbunden ist und der in das Sicherheitsventil-Gehäuse abdichtend einsetzbar ist und mit dem Ventilschließglied (30) zusammenwirkt,
**dadurch gekennzeichnet, daß**
(g) die Verbindung zwischen der Baugruppe (112) und dem Sicherheitsventil-Gehäuse (114;132) allein durch Einschrauben des Ventilsitzkörpers (32) unmittelbar in das Sicherheitsventil-Gehäuse (114;132) herstellbar ist.

2. Baugruppe nach Anspruch 1, **dadurch gekennzeichnet, daß** das Gehäuseunterteil (10) und das Gehäuseoberteil (14) Blech-Tiefziehteile sind.

3. Baugruppe nach Anspruch 2, **dadurch gekennzeichnet, daß** der Rand der Membran (22) zusammen mit einem Rand (20) des Gehäuseoberteils (14) durch Einrollen mit dem Gehäuseunterteil (10) verbunden ist.

4. Baugruppe nach Anspruch 2 oder 3, **dadurch gekennzeichnet, daß** das Gehäuseunterteil (10) seitliche Durchbrüche (12) zum Austritt des Druckmittels beim Ansprechen des Sicherheitsventils aufweist.

5. Baugruppe nach einem der Ansprüche 2 bis 4, **dadurch gekennzeichnet, daß** der Ventilsitzkörper (32) an seinem ventilsitzseitigen Ende einen Bund (34) aufweist, der von einem umgebogenen Rand (38) des Gehäuseunterteils (10) umgriffen wird.

6. Baugruppe nach einem der Ansprüche 2 bis 5, **dadurch gekennzeichnet, daß**
(a) der Gehäuseoberteil (14) an seiner Stirnfläche einen Durchbruch (64) aufweist, dessen Rand in eine Ringnut (68) einer Gewindespindel (62) eingreift, und
(b) das Federwiderlager (50) ein Blechteil ist, das auf der Gewindespindel (62) geführt ist und an seinem Rand wenigstens eine Ausnehmung aufweist, in welche eine axial verlaufende Sicke (76) des Gehäuseoberteils (14) eingreift.

7. Baugruppe nach Anspruch 6, **dadurch gekennzeichnet, daß** die Gewindespindel (62) eine Längsbohrung (80) aufweist, durch welche sich ein mit dem Ventilschließglied (30) verbundener Ventilstößel (82) geführt ist.

8. Baugruppe nach Anspruch 7, **dadurch gekennzeichnet, daß**
(a) das Ventilschließglied (30) von einem verdickten Mittelteil der gummielastischen Membran (22) gebildet ist und
(b) das mit einem kegelstumpfförmigen Bund (84) versehene Ende des Ventilstößels (82) in einer Ausnehmung (86) des verdickten Mittelteils der Membran (22) eingerastet ist.

9. Baugruppe nach Anspruch 8, **dadurch gekennzeichnet, daß** auf der Membran (22) ein topfförmiger Blechteil (52) mit einem zentralen Durchbruch (88) aufliegt, durch welchen der Ventilstößel (82) hindurchgeführt ist und der mit seinem Innenrand über einen Bund (90) des Ventilstößels (82) greift.

10. Baugruppe nach Anspruch 9, **dadurch gekennzeichnet, daß** auf dem Boden (54) des topfförmigen Blechteils (52) ein Federteller aufliegt, an welchem die als Schraubenfeder ausgebildete Belastungsfeder (48) anliegt.

11. Baugruppe nach einem der Ansprüche 2 bis 10, **dadurch gekennzeichnet, daß**
(a) auf dem Gehäuseoberteil (14) ein topfförmiger Anlüftgriff (92) sitzt,
(b) der Boden (94) des topfförmigen Anlüftgriffes (92) einen zentralen Durchbruch (96) aufweist, durch welchen das Ende des Ventilstößels (82) hindurchragt,
(c) auf dem Ende des Ventilstößels (82) ein Mitnehmerring (98) sitzt und
(d) an dem Gehäuseoberteil (14) eine mit Schrägflächen versehene Griffhalterung (100) angebracht ist, deren Schrägflächen mit Nocken (102) des Anlüftgriffes zusammenwirken.

12. Baugruppe nach Anspruch 11, **dadurch gekennzeichnet, daß** die Griffhalterung (100) mittels Haltenocken durch eine Schnappverbindung undrehbar in den Gehäuseunterteil (10) eingerastet ist.

13. Baugruppe nach Anspruch 12, **dadurch gekennzeichnet, daß** am Umfang der Griffhalterung Ansätze vorgesehen sind, welche eine Drehmomentausübung zum Einschrauben der Baugruppe mit dem Ventilsitzkörper in ein Sicherheitsventil-Gehäuse ermöglichen.
